# EUROPEAN PATENT APPLICATION

(11) **EP 1 862 899 A1**
(43) Date of publication of application: **05.12.2007**
(21) Application number: 06011261.2
(22) Date of filing: 31.05.2006
(51) Int. Cl.: G06F 9/44

(54) **Method of editing default graphic object for man-machine interface and editor using the same**

(71) Applicant: Delta Electronics, Inc., Taoyuan Sien 333, Taiwan (CN)
(72) Inventor: Lin, Jun-Fu, Tainan County 74144 Taiwan (CN)
(74) Representative: Urner, Peter

(57) **Abstract**

A method of editing default graphic object for man-machine interface installs an editor comprised of a graphic object editor 2, a graphic object database 3 and a PC screen editor 4 connected to a man-machine interface device 1, such that users can self define or modify an old graphic object to form a new graphic object 7 as needed by graphic and attribute tool 22 of the graphic object editor 2, and stores the new graphic object 7 into the graphic object database 3, and uses the screen editor 4 to obtain the self-defined or modified graphic object from the graphic object database 3 to perform screen editing, and downloads the screen to the man-machine interface for its use and execution.

## Description

### BACKGROUND OF THE INVENTION

### 1. Field of the Invention

The present invention relates to a man-machine interface device, and more particularly to a man-machine interface device that allows users to edit a default graphic object on their own or assemble a graphic object with personalized features and satisfying the application requirements for the use of a man-machine interface device.

### 2. Description of Prior Art

In a man-machine interface device, basic graphic elements and application specified graphic elements are provided by a PC screen editor to edit and create application screen data of a man-machine interface device, and the data is downloaded to the man-machine interface device, so that an application screen can be generated by a built-in firmware of the man-machine interface device automatically.

Siemens, Rockwell and Proface are representative leading designers of man-machine interface devices and PC screen editors, and their man-machine interface devices operating with dedicated computer screen editors provide users an easy way of editing and using a screen. In the design of a man-machine interface devices, different graphic elements created by a dedicated design and a coding method are set as default graphic elements first, and then users can later use such fixed built-in default graphic elements for screen editing.

However, the architecture and application of the aforementioned prior art man-machine interface device and PC application screen editor still have the following drawbacks:
1. The software installed in the man-machine interface device must be updated from time to time to update the software editing function for graphic elements.
2. A new graphic object must be created by a program provided by the original designer or manufacturer, and the graphic object cannot be custom-made or created by users to meet special application requirements and features.
3. The created graphic elements are not portable, and thus the graphic elements cannot be carried, opened or used all the time. Further, the graphic elements cannot be modified easily.
4. The fixed graphic element cannot be edited or changed, and a new graphic object cannot be created. Thus, the flexibility of editing the screen is limited.
5. Graphic elements are not vector figures and cannot be enlarged or reduced easily. Even though a graphic element can be enlarged or reduced by a modifying program, the original features of the graphic element may be changed.

### SUMMARY OF THE INVENTION

In view of the foregoing shortcomings of the prior art, the inventor of the present invention based on years of experience in the related industry to conduct experiments and modifications, and finally designed a feasible method to overcome the shortcomings of the prior art.

Therefore, the present invention is to overcome the shortcomings of the prior art and avoid the existing deficiencies by providing a man-machine interface device that allows user to edit or assemble a new default graphic object for the graphic elements used in a screen, and the new screen with edited graphic objects can be used on the man-machine interface device, and thus the graphic elements no longer are developed by a program that is provided by editor manufacturers only, but users also can set the default graphic objects on their own.

The man-machine interface default graphic object editor of the invention is an application editor installed in a man-machine interface device that is coupled to a PC, and the editor comprises:
a graphic object editor, for generating a new graphic object by creating or editing an old graphic element for a drawing action together with an editing of a figure, an attribute and an action;
a graphic object database, coupled with the graphic object editor for storing the new graphic object; and
a screen editor, coupled with the graphic object database for accessing a graphic element, editing a screen, and download the new screen to the man-machine interface device for its use.

To achieve the foregoing objective, the present invention provides a method of editing default graphic object for man-machine interface and an editor for editing default graphic object for man-machine interface according to the method that comprises the steps of:
Starting a graphic object editor at a PC end, and using a drawing action to create a graphic element, and creating and modifying an attribute and an action of the graphic element to produce or edit a self-defined new graphic object;
Saving the new graphic object into a graphic object database as a file;
Starting a screen editor to read the graphic element in the graphic object database, and modifying an attribute of a graphic element to match with the display features and behaviors of the graphic element action to produce a new edited screen; and
Compiling the screen data of the new edited screen, and downloading the screen data to the man-machine interface device, and a screen of new graphic objects is produced by a built-in firmware for its use.

### BRIEF DESCRIPTION OF DRAWINGS

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 is a schematic block diagram of a preferred embodiment of the present invention;
Fig. 2 is a schematic view of a screen and its tools of a graphic object editor according to a preferred embodiment of the present invention;
Fig. 3 is a schematic view of a screen and its tools of a screen editor according to a preferred embodiment of the present invention;
Fig. 4 is a flow chart of a preferred embodiment of the present invention;
Fig. 5 is a flow chart of an editing process according to a preferred embodiment of the present invention;
Fig. 6 is a schematic view of editing a screen by a graphic object editor according to a preferred embodiment of the present invention; and
Fig. 7 is a schematic view of editing a screen by a screen editor according to a preferred embodiment of the present invention.

### DETAILED DESCRIPTION OF THE INVENTION

The technical characteristics, features and advantages of the present invention will become apparent in the following detailed description of the preferred embodiments with reference to the accompanying drawings.

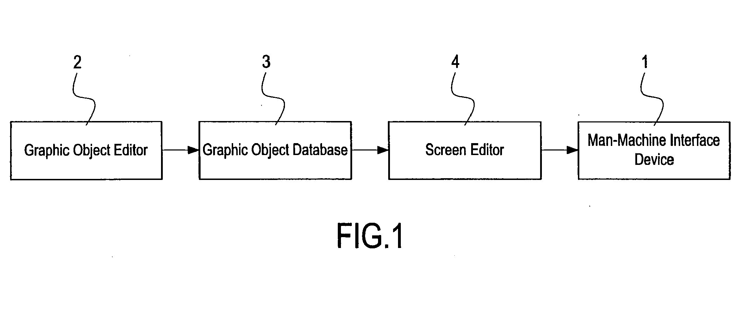

Referring to Figs. 1 to 3 for the schematic views of an assembly, a structure and am editor screen of a default man-machine interface graphic object editor according to a preferred embodiment of the present invention, the default man-machine interface graphic object editor installed at a PC end (not shown in the figure) of a man-machine interface device 1, includes an application editor comprised of a graphic object editor 2, a graphic object database 3 and a screen editor 4, such that users can use a graphic object editor 2 to set a new default graphic object or modify an old graphic element to produce a new graphic object (not shown in the figure) that is saved into the graphic object database 3 by an instruction, and the screen editor 4 obtains a graphic element from the graphic object database 3 for performing a screen editing, and the new screen is downloaded to the man-machine interface device 1 for its use.

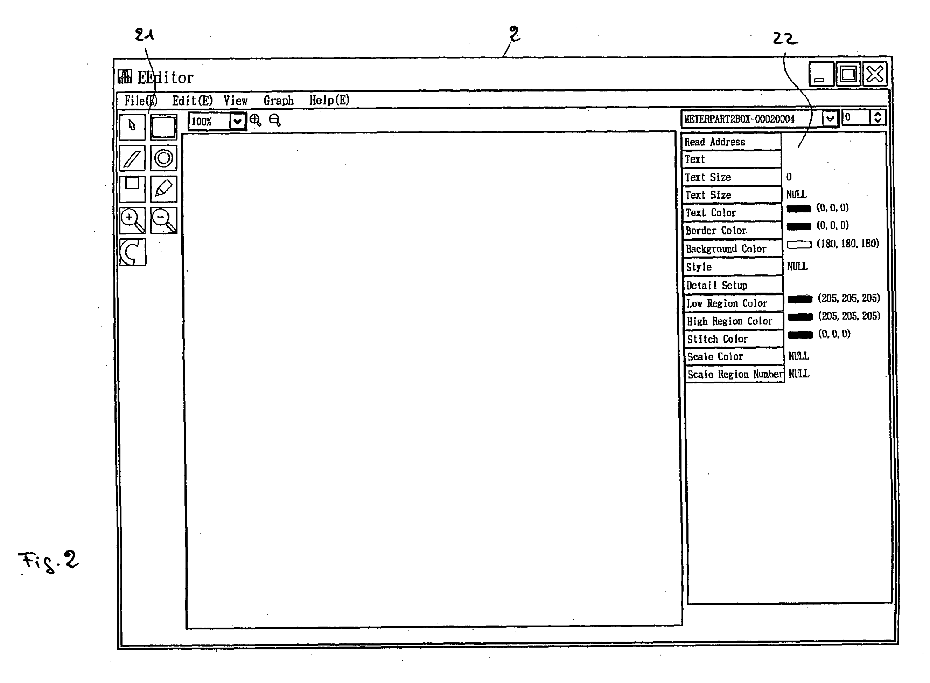

The graphic object editor 2 as shown in Fig. 2 further comprises at least one drawing tool 21 and at least one attribute tool 22, so that users can use the drawing tool 21 to create a display figure of a new graphic object, and then use the attribute tool 22 to create or modify an attribute of the new graphic object to produce a user default editing or assemble a graphic element with a personalized feature and satisfying its application requirement.

The graphic element is a vector figure comprised of a figure, an attribute and an action, and the graphic element can be enlarged or reduced according to the application requirement and the enlargement or reduction of the graphic element will not change the figure.

The figure is produced by a plurality of drawing actions of the drawing tool 21 for displaying the appearance and shape of a graphic element on a display screen. Each drawing action refers to a code read by the program, such that a corresponding drawing program is executed according to individual codes to display the graphic element on the screen.

The attribute refers to a data stored in a graphic element, and the attribute can be used by a program or an action. In other words, each graphic element has individual attribute data.

The action refers to a change of some attributes that will affect the graphic element on the screen or a change of other internal attributes, while the graphic element is being used. The aforementioned action is set as a default by users and can be executed by a program.

The graphic object database 3 is a file for storing data. In other words, the graphic object database 3 provides a place for storing all new graphic objects or old graphic elements that will be used, and these graphic objects are saved in form of a file.

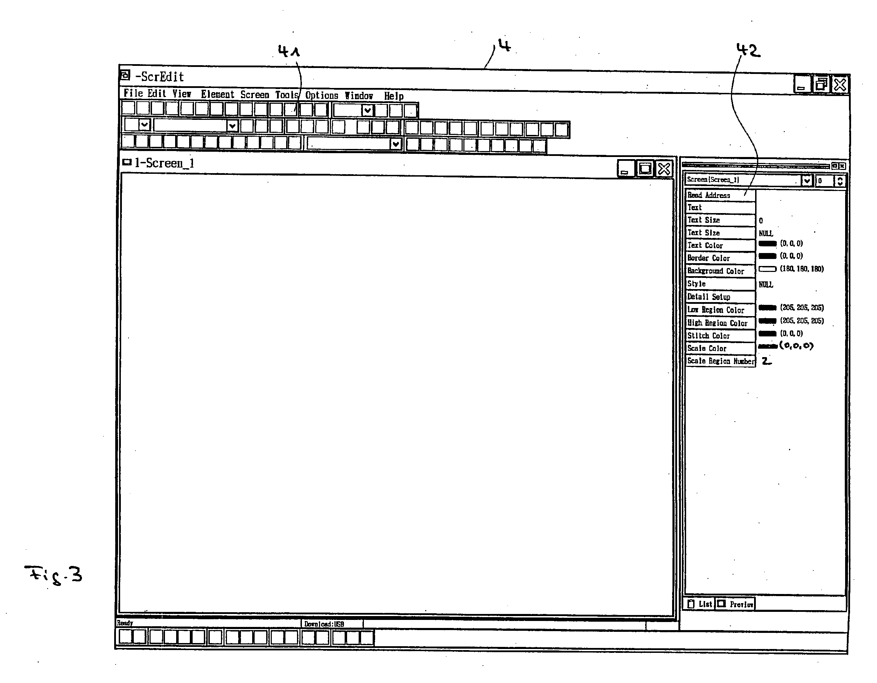

The foregoing screen editor 4 as shown in Fig. 3 further comprises: at least one editing tool 41 and at least one attribute tool 42, so that users can use the foregoing editing tool 41 to work with the attribute tool 42 to edit or modify a new graphic object obtained from the graphic object database 3 or the attribute of an old graphic element to form a required screen editing and download the graphic objects to the man-machine interface device 1 for their use.

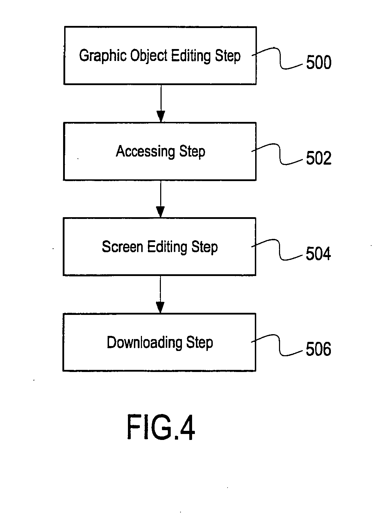

Refer to Fig. 4 is a flow chart for editing a screen of a man-machine interface device and using a graphic element by a preferred embodiment of the aforementioned editor of the present invention. In a graphic element editing step (Step 500), a user starts a graphic object editor 2 at a PC end, and uses a drawing tool 21 and drawing actions to create a figure of the graphic element and an attribute tool 22 to create and modify an attribute of the figure and generate an action fro a default editing or modify an old graphic element to produce a new graphic object.

In an accessing step (Step 502), the new graphic object edited and created by the graphic object editor 2 is saved as a file in a graphic object database 3 by the control of an instruction.

In a screen editing step (Step 504), a screen editor 4 is started, and an applicable graphic element is obtained from the graphic object database 3, and a built-in editing tool 41 and an attribute tool 42 are used for editing or modifying an attribute of the graphic element to match the display features or behavior of a graphic element action and produce a new editing screen.

In a downloading step (Step 506), a new editing screen data is compiled and downloaded to the man-machine interface device 1, and the built-in firmware is used for automatically generating a screen of the new graphic object.

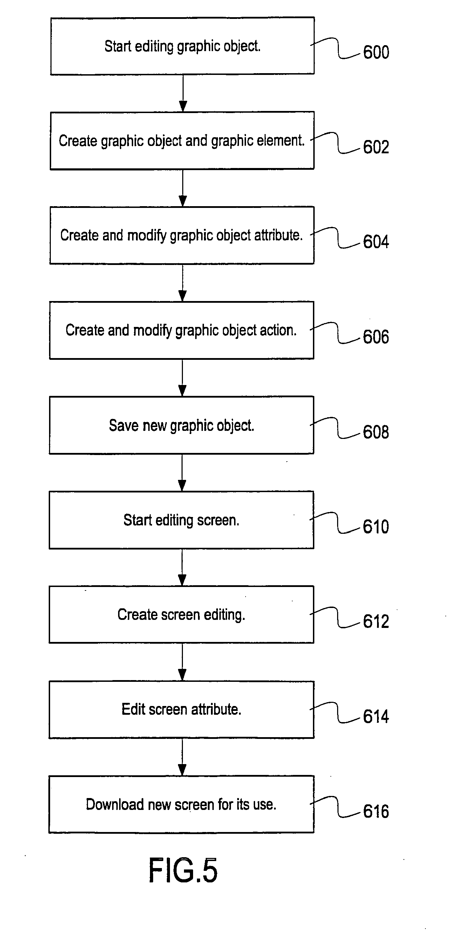

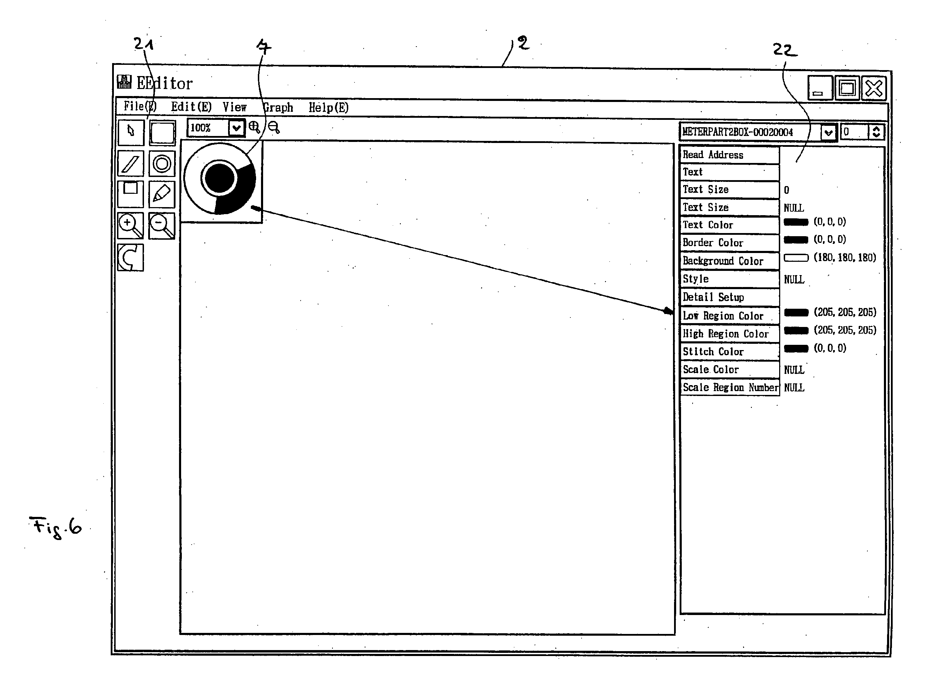

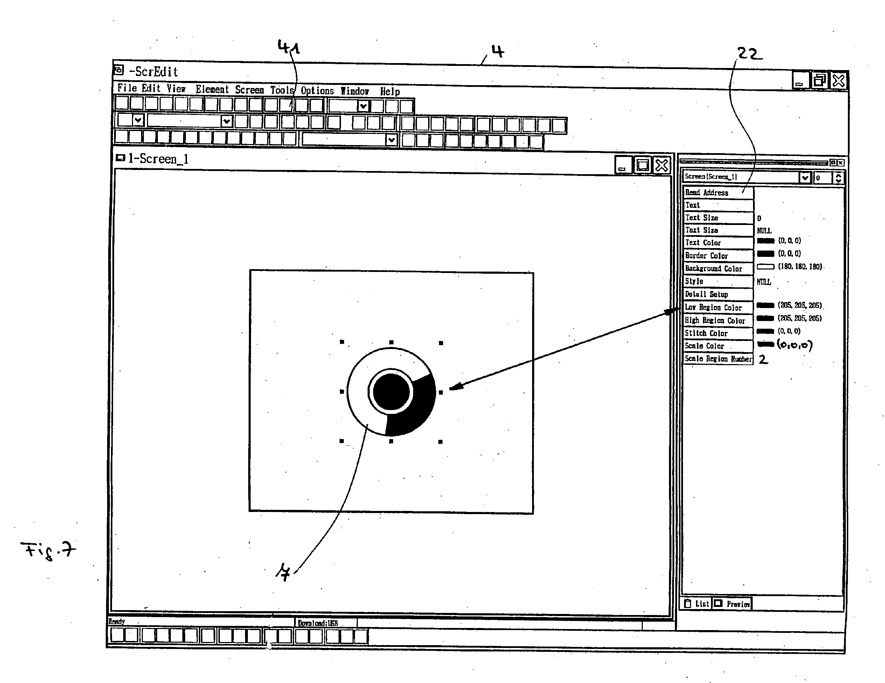

Referring to Figs. 5 to 7 for the flow chart and schematic views of an editing process of the editing method of the present invention, the editing method comprises the following steps:
In Step 600, an editing of a graphic element is started and a graphic object editor 2 is opened to create a new graphic object or obtain an old graphic element from a graphic object database 3 and modify the old graphic element to generate a new graphic object.
In Step 602, a figure of the graphic element is created, and a drawing tool 21 of the graphic object editor 2 is used to create the appearance of a graphic element figure and a new graphic object 7 displayed on a screen by a series of drawing actions as shown in Fig. 6.
In Step 604, an attribute of the graphic element is created and modified, and an attribute tool 22 of the graphic object editor 2 is used for modifying and creating an attribute of the graphic element as shown in Fig. 6. By modifying, setting, or editing the value of an attribute of the graphic element table (which is the size of displayed text), the size and color of the display text can be changed.
In Step 606, a graphic element action is created and modified, and the attribute tool 22 of the graphic object editor 2 is used to associate an action with an attribute as shown in Fig. 6. The action generates the display color of the figure by modifying a lower limit area color, such as changing a green color to a red color, which is an action for creating a new graphic object 7.
In Step 608, the new graphic object 7 is save, and the new graphic object 7 edited by the graphic object editor 2 is added and saved as a file in the graphic object database 3.
In Step 610, a screen editing is started, and the screen editor 4 is opened to perform a new screen editing.
In Step 612, a screen is edited and created, and the editing tool 41 of the screen editor 4 is used to obtain a required new graphic object from the graphic object database 3 and add the new graphic object 7 on the editing screen as shown in Fig. 7.
In Step 614, a screen attribute is edited, and an attribute tool 42 of the screen editor 4 is used to modify the attribute of the new graphic object added on the editing screen. In other words, if the attribute of the new graphic object 7 is used by a graphic element action or a related program, and such modified attribute will change the display feature or behavior of the graphic element.
In Step 616, a new screen is downloaded for its use, and the new edited screen data is compiled and downloaded to the man-machine interface device 1, and the screen of the new graphic object 7 is generated and used by a built-in firmware.

According to the foregoing editing method, users can generate a screen of a new default graphic object for the man-machine interface device 1 automatically. When the man-machine interface device 1 is operated, users can obtain the operating status of the man-machine interface device 1 from an action of a new graphic object 7 on the screen. For example, the action is a graphic element action to change the color of the display from a green color to a red color.

Since the foregoing editor and editing method allow users to edit the default graphic setting on their own, or edit or modify old graphic elements to produce graphic elements with a personalized feature and satisfying the application requirement, and the new graphic object can be edited to produce a new screen used for the man-machine interface device, and the present invention has the following advantages:
1. The man-machine interface graphic element editing software can edit graphic elements and add the new graphic objects.
2. The figure of the graphic element is a vector figure, and thus its appearance will not be changed when the figure is enlarged or reduced.
3. The graphic element is portable, and users just need to use a graphic object editor to open a graphic object database file to edit an old graphic element data and add a new graphic element, and the screen editor can use the new edited graphic object database to generate a new screen.
4. Graphic elements no longer are developed and provided by the editor manufacturers only, but users can generate graphic elements on their own.
5. Graphic elements are editable, and users can edit or modify the graphic elements to produce a new graphic object.

## Claims

1. A default man-machine interface graphic object editor, being an application editor installed in a man-machine interface device 1 which is coupled to a PC end, and the editor comprising:
a graphic object editor 2, for creating a new graphic object 7 by an editing operation;
a graphic object database 3, coupled to the graphic object editor 2 for storing the new created graphic object; and
a screen editor 4, coupled to the graphic object database 3 for obtaining a graphic object, creating a new screen by an editing operation, and downloading the new screen to the man-machine interface device 1 for use.

2. The default man-machine interface graphic object editor of claim 1, further comprising at least one drawing tool 21 and attribute tool 22 for creating a display figure of the new graphic object 7, setting up and modifying an attribute of the display figure to form a new default graphic element.

3. The default man-machine interface graphic object editor of claim 2, wherein the graphic element generated by the graphic object editor 2 comprises a figure, an attribute and an action; the figure refers to an appearance and shape of the graphic element displayed on a display screen and comprised of a plurality of drawing actions of the drawing tool 21; the attribute refers to a data stored in the graphic element, and the attribute can be used by a program or an action; and the action refers to a change of the attribute that will affect the graphic element on the screen or a change of other internal attribute while the graphic element is being used.

4. The default man-machine interface graphic object editor of claim 2, wherein the graphic element is a vector figure.

5. The default man-machine interface graphic object editor of claim 1, wherein the graphic object database 3 is a file for storing data.

6. The default man-machine interface graphic object editor of claim 1, wherein the screen editor 4 further comprises at least one editing tool 41 and at least one attribute tool 42 for editing and modifying an attribute of a new graphic object 7 obtained from the graphic object database 3 to produce an applicable required screen editing.

7. A method of editing default graphic object for man-machine interface, comprising the steps of:
starting a graphic object editor 2 at a PC end, and using a drawing action to create a graphic element figure to work with an attribute and an action of a graphic element to create, modify or generate a new default graphic object;
saving the created new graphic object 7 as a file in a graphic object database 3;
starting a screen editor 4, and reading a graphic element in the graphic object database 3, and modifying the attribute of the graphic element to work with the display appearance or behavior of the graphic element action to produce a new editing screen; and
compiling the new edited screen data, and downloading the screen data to the man-machine interface device 1, and using a built-in firmware to generate a new graphic object 7 screen automatically.

8. The method of editing default graphic object for man-machine interface of claim 7, wherein the graphic element figure is created by using a drawing tool 21 of the graphic object editor 2, and a series of drawing actions are used to create a graphic element figure and display the appearance of a graphic element on a screen.

9. The method of editing default graphic object for man-machine interface of claim 7, wherein the attribute of the graphic element is created or modified by using an attribute tool 22, 42 of the graphic object editor 2.

10. The method of editing default graphic object for man-machine interface of claim 7, wherein the graphic element action is created or modified by using an attribute tool 22, 42 of the graphic object editor 2, and the action and the attribute are associated to create the graphic element action.

11. The method of editing default graphic object for man-machine interface of claim 7, wherein the new graphic object 7 is stored as a file in a graphic object database 3, after a new graphic object 7 is edited by the graphic object editor 2 and added in the graphic object database 3.

12. The method of editing default graphic object for man-machine interface of claim 7, wherein the screen is edited or created by using an editing tool 41 of the screen editor 4 to obtain a desired new graphic object 7 from the graphic object database 3 and add the new graphic object 7 to the editing screen.

13. The method of editing default graphic object for man-machine interface of claim 7, further comprising a screen attribute editing step that uses an attribute tool 42 of the screen editor 4 to modify the attribute of a new graphic element added on the editing screen, so as to change the display feature or behavior of the graphic element, and the attribute of the new graphic object 7 is used by a graphic element action related program.
